# EUROPÄISCHE PATENTSCHRIFT

(11) **EP 0 689 117 B1**
(45) Veröffentlichungstag und Bekanntmachung des Hinweises auf die Patenterteilung: **12.08.1998**
(21) Anmeldenummer: 95109396.2
(22) Anmeldetag: 17.06.1995
(51) Int. Cl.: G05D 16/20, G05D 16/06, G05D 16/10

(54) **Druckregler für Druckluftbeschaffungsanlagen von Kraftfahrzeugen**
Pressure regulator for installation of compressed air production for vehicles
Régulateur de pression pour installations de production d'air comprimé dans des véhicules

(30) Priorität: 21.06.1994 DE 4421575
(43) Veröffentlichungstag der Anmeldung: 27.12.1995
(73) Patentinhaber: GRAU GMBH, D-69123 Heidelberg (DE)
(72) Erfinder: Blanz, Roland, D-69253 Heiligkreuzsteinach (DE)
(74) Vertreter: Rehberg, Elmar, Dipl.-Ing.

(56) Entgegenhaltungen:
- EP-A- 0 555 500
- DE-A- 3 506 178

## Beschreibung

Die Erfindung bezieht sich auf einen elektro-pneumatischen Druckregler für Druckluftbeschaffungsanlagen von Kraftfahrzeugen, mit einem einen Eingangs-, einen Durchgangsanschluß und einen Auslaß aufweisenden Gehäuse, in dem ein Durchtrittsraum für die herangeführte Druckluft vorgesehen ist, der über ein gesteuertes Auslaßventil in dessen Offenstellung mit der Atmosphäre verbindbar ist, mit einem dem Durchtrittsraum nachgeschalteten Rückschlagventil, mit einer Einrichtung zum abwechselnden Öffnen und Schließen des Auslaßventils und mit einem den Druck nach dem Rückschlagventil erfassenden Drucksensor. Solche Druckregler sind Bestandteil der üblichen Druckluftbeschaffungsanlage auf Kraftfahrzeugen, insbesondere Nutzfahrzeugen. Dabei ist der Druckregler zwischen den Kompressor und ein Mehrkreisschutzventil eingeschaltet, von dem Leitungen zu den einzelnen Druckluftbehältern der einzelnen Kreise führen.

Ein elektro-pneumatischer Druckregler der eingangs beschriebenen Art ist aus der DE 35 06 178 A1 bekannt. Der Druckregler besitzt ein Gehäuse mit einem Eingangsanschluß und einem zur Atmosphäre führenden Auslaß. An einem Durchgangsanschluß ist üblicherweise eine letztlich zu einem Luftbehälter führende Leitung angeschlossen. Zwischen dem Durchtrittsraum und dem Durchgangsanschluß ist ein Rückschlagventil vorgesehen, welches in Richtung auf den Durchgangsanschluß öffnet und eine Rückströmung in entgegengesetzter Richtung verhindert. Vor dem Rückschlagventil ist ein Auslaßventil gebildet, dem eine Einrichtung zum abwechselnden Öffnen und Schließen zugeordnet ist, die ein Magnetventil aufweist, welches als 3/2-Wege-Ventil ausgebildet ist. Es ist ein Drucksensor vorgesehen, der als Druck/Spannungswandler ausgebildet ist und der den Druck nach dem Rückschlagventil, also am Durchgangsanschluß, erfaßt. Das Auslaßventil ist nach Art eines Schnellöseventils mit einer eingespannten Membran ausgebildet. Über eine elektrische Schalteinrichtung wird das Magnetventil angesteuert, um die Lastlaufphase und die Leerlaufphase des Druckreglers zu steuern. Damit wird ein elektro-pneumatischer Druckregler geschaffen, der die Funktionen der bisher bekannten mechanisch aufgebauten Druckregler erfüllt.

Bekannte Druckregler, auch derjenige nach der DE 35 06 178 A1, werden als Bestandteil einer Druckluftbeschaffungseinrichtung in einer Anlage so verbaut, daß über eine Leitung an den Druckregler ein Mehrkreisschutzventil angeschlossen ist, welches als separates Anlagenteil ausgebildet ist. Solche Mehrkreisschutzventile weisen wiederum ein eigenes Gehäuse auf, in welchem in der Regel mehrere Überströmventile angeordnet sind. Von den Ausgängen des Mehrkreis schutzventils führen entsprechende Leitungen zu Druckluft behältern, die den einzelnen Kreisen zugeordnet sind. Damit entsteht insgesamt eine Anlage aus verschiedenen singulären Anlagenteilen, wie Druckregler, Mehrkreisschutzventil, Trockner usw., die jeweils über Leitungen verbunden sind, so daß sich bei der Anordnung der Einzelteile am Fahrzeug ein entsprechender Montageaufwand ergibt. Auch wenn ein Trockner mit einem Druckregler zusammengefaßt wird, vermindert sich der Bauaufwand nur unwesentlich.

Aus der DE 35 14 989 A1 ist ein Druckregler mit integriertem Mehrkreisschutzventil bekannt. Sowohl der Druckregler als auch das Mehrkreisschutzventil sind rein mechanischpneumatisch ausgebildet. An dem gemeinsamen Gehäuse kann auch ein Lufttrockner vorgesehen sein. Für eine elektropneumatische Ausbildung des Druckreglers und des Mehrkreisschutzventils enthält diese Druckschrift keine Anregung.

Der Erfindung liegt die Aufgabe zugrunde, einen elektro-pneumatischen Druckregler der eingangs beschriebenen Art so weiterzubilden, daß er auch die Funktionen eines Mehrkreisschutzventiles erfüllt; dabei sollen einfach aufgebaute ähnliche Elemente vorgesehen sein, die geeignet sind, eine Vielzahl möglicher Betriebsweisen zu eröffnen.

Erfindungsgemäß wird dies bei einem Druckregler der eingangs beschriebenen Art dadurch erreicht, daß im Gehäuse des Druckreglers zwecks Integration eines Mehrkreisschutzventils mehrere gleichartige Steuer- und Anzeigeeinheiten vorgesehen sind, die nach dem Rückschlagventil des Druckreglers abzweigen, und daß jede Steuer- und Anzeigeeinheit ein entgegen der Strömungsrichtung schließendes Rückschlagventil, eine Betätigungseinheit zum gesteuerten Öffnen eines Durchlaßventils und einen Drucksensor zum Erfassen des Drucks nach dem Rückschlagventil aufweist.

Die Erfindung geht von dem Gedanken aus, einen Druckregler und ein Mehrkreisschutzventil so zu integrieren, daß innerhalb eines gemeinsamen Gehäuses eines solchen singulären Anlagenteiles Elemente vorgesehen sind, die sowohl die Funktion des Druckreglers wie auch die des Mehrkreisschutzventiles sowie ggf. eines zusätzlich angeordneten Trockners erfüllen. Die Steuer- und Anzeigeeinheiten, die letztlich funktionell zu dem Mehrkreisschutzventil gehören, können untereinander gleichartig ausgebildet und angeordnet sein, wobei über unterschiedliche Einstellungen und/oder Steuerphilosophien zwischen den einzelnen Kreisen durchaus unterschieden werden kann. Aber auch die Ausbildung des Druckreglers kann so durchgeführt werden, daß auch hier eine weitgehend gleichartige Steuer- und Anzeigeeinheit vorgesehen ist, die freilich entsprechend der Philosophie eines Druckreglers zu steuern ist. Die Steuer- und Anzeigeeinheiten, die dem Mehrkreisschutzventil zugeordnet sind, müssen ein entgegen der Strömungsrichtung schließendes Rückschlagventil aufweisen, welches die Funktion der Kreissicherung in den einzelnen Kreisen des Mehrkreisschutzventiles zu erfüllen hat. Weiterhin muß jede Steuer- und Anzeigeeinheit ein Durchlaßventil aufweisen, über welches die Druckluft in den Vorratsbehälter des jeweiligen Kreises gelangt. Dieses Durchlaßventil ist für jeden Kreis mit einer Betätigungseinheit zusammengefaßt, um das Durchlaßventil öffnen und schließen zu können. Schließlich gehört zu jeder Steuer- und Anzeigeeinheit noch ein Drucksensor, der jedoch den Druck nach dem Rückschlagventil, also den Druck im Vorratsbehälter des jeweiligen Kreises erfaßt. Die insoweit gleich aufgebauten und ausgebildeten Steuer- und Anzeigeeinheiten können durchaus unterschiedlich eingestellt und/oder gesteuert werden, um beispielsweise eine bevorzugte Befüllung in den beiden Betriebsbremskreisen über das Mehrkreisschutzventil im Druckregler zu erreichen. Insgesamt entsteht auf diese Art und Weise ein preiswertes, kompaktes Gerät. Leitungsverbindungen zwischen Druckregler und Mehrkreisschutzventil kommen gänzlich in Fortfall, weil diese innerhalb des Gehäuses realisiert werden. Auch die Sicherheitsfunktion des Druckreglers wird verwirklicht. Hierzu dient das Auslaßventil des Druckreglers, welches in einem Bestandteil ein in den Auslaß hinein öffnendes Rückschlagventil darstellt. Über die Einrichtung zum abwechselnden Öffnen und Schließen am Druckregler werden die verschiedenen Phasen des Druckreglers geschaltet. Im Bereich des Mehrkreisschutzventiles ist jeder Kreis einzeln handhabbar. Es ergibt sich ohne weiteres auch die Möglichkeit, Gruppen von Kreisen zu bilden und diese ggf. gemeinsam oder ähnlich zu schalten. Besonders einfach läßt sich eine Druckbegrenzungsfunktion im Bereich des integrierten Mehrkeisschutzventiles erreichen. Ein zusätzlicher anlagenmäßiger Aufwand entsteht nicht. Es muß lediglich die betreffende Steuer- und Anzeigeeinheit über die Betätigungseinheit so gesteuert werden, daß sich in dem Luftbehälter des betreffenden Kreises der entsprechend gewünschte reduzierte Druck aufbaut. Jede Steuer- und Anzeigeeinheit besteht nur aus wenigen gleichartig aufgebauten Einzelteilen, die im Bedarfsfalle leicht austauschbar sind. Die einfache Ausbildung der Steuer- und Anzeigeeinheiten ermöglicht es gleichzeitig, bei dem Druckregler/Mehrkreisschutzventil auch ggf. einen regenerierbaren Trockner zu integrieren, falls dies gewünscht wird oder sinnvoll ist. Damit entfallen dann auch gesonderte Leitungsverbindungen zu einem solchen Trockner, und das Gesamtgerät wird noch kompakter.

Die Betätigungseinheit kann zweckmäßig ein 3/2-Wege-Magnetventil aufweisen, also ein Magnetventil mit eigener Entlüftung, über welches das Durchlaßventil im Sinne eines Öffnens bzw. Schließens angesteuert wird. Ein solches Magnetventil erlaubt die Verarbeitung elektrischer Steuerimpulse. Die pneumatischen Leitungsverbindungen können alle auf kleinstem Raum innerhalb des Gehäuses des Druckreglers angeordnet werden. Die Drucksensoren zum Erfassen des Druckes nach dem Rückschlagventil, die in jedem Kreis vorgesehen sind, können als Druck/Spannungswandler ausgebildet sein, um auf diese Art und Weise einen elektrischen Impuls zur Verfügung zu stellen, der einfach weiterverarbeitet werden kann.

Das Rückschlagventil jeder Steuer- und Anzeigeeinheit kann zugleich als Sicherheitsventil ausgebildet sein. Dies bedeutet, daß der Ventilkörper des Rückschlagventils durch eine vergleichsweise mit hoher Anpreßkraft einwirkende Feder vorgespannt ist. Die Kraft der Feder kann beispielsweise einem abgesicherten Druck von 7 bar entsprechen. Damit wird die Kreisdrucksicherung im Mehrkreisschutzventil verwirklicht. Im Sinne des Sicherheitsventils ist damit sichergestellt, daß auch bei einem Defekt in einem der Kreise ein Notbetrieb mit dem abgesicherten Druck aufrechterhalten werden kann.

Für die Betätigung des gesteuerten Auslaßventils des Druckreglers und der Steuer- und Anzeigeeinheiten des Mehrkreisschutzventils kann eine gemeinsame Steuerelektronik vorgesehen sein, die die Magnetventile der Betätigungseinheiten in Abhängigkeit von den von den Drucksensoren erfaßten Drücken steuert. Diese Steuerelektronik ermöglicht eine große Variationsbreite in der Art und Weise, wie die einzelnen Kreise gehandhabt bzw. gesteuert werden. Die gemeinsame Steuerelektronik kann mit einer insbesondere in der Fahrerkabine angeordneten Anzeigeeinrichtung verbunden sein. Damit ist für den Fahrer des Kraftfahrzeuges erkennbar, ob und inwieweit die verschiedenen Kreise aufgefüllt sind und ordnungsgemäß zur Verfügung stehen. Die Steuerelektronik sollte programmierbar ausgebildet sein, um verschiedene gewünschte Wirkungsweisen zu realisieren. Die in der Fahrerkabine angeordnete Anzeigeeinrichtung dient als Manometerersatz, ohne daß es erforderlich wäre, die betreffenden pneumatischen Leitungen bis zur Fahrerkabine zu führen.

In dem Durchtrittsraum des Druckreglers vor dem nachgeschalteten Rückschlagventil kann ein regenerierbarer Trockner vorgesehen sein, der über die gemeinsame Steuerelektronik gesteuert ist; für die Regeneration des Trockners ist ein 3/2-Wege-Magnetventil mit nachgeschaltetem Rückschlagventil vorgesehen. Damit kommt ein separater Druckluftvorratsbehälter allein für Regenerationszwecke in Fortfall.

Besonders einfach wird die konstruktive Ausführung, wenn das Rückschlagventil und das Durchlaßventil jeder Steuer- und Anzeigeeinheit baulich vereinigt ist, so daß beide Funktionen von einem Element erfüllt werden können. Hierbei ist es erforderlich, dem Ventilkörper des Rückschlagventils über die Betätigungseinheit zu betätigen.

Dem Rückschlagventil jeder Steuer- und Anzeigeeinheit kann als Betätigungseinheit ein Kolben mit Stößel zugeordnet sein, dessen Druckkammer über das jeweilige Magnetventil belüftbar ist. Die Betätigungseinheiten einschließlich der Magnetventile des Druckreglers und des Mehrkreisschutzventils können damit durchaus vergleichbar aufgebaut sein. Es besteht die Möglichkeit, jedes Durchlaßventil bzw. Rückschlagventil jedes Kreises getrennt zu handhaben. Es ist aber auch möglich, daß die Druckkammern mehrerer Kolben mehrerer Steuer- und Anzeigeeinheiten über ein gemeinsames Magnetventil belüftbar sind.

Zur Steuerung der Regeneration des Trockners kann ein Feuchtefühler vorgesehen sein, der zweckmäßig in der gemeinsamen Anströmung des Mehrkreisschutzventiles angeordnet ist. Über diesen Feuchtefühler wird ein Regenerationslauf des Trockners ausgelöst.

Jedem Rückschlagventil kann je ein in die Atmosphäre öffnendes Sicherheitsventil nachgeschaltet sein, welches auf einen Öffnungsdruck zwischen dem Betriebsdruck des betreffenden Kreises und dem Öffnungsdruck des Auslaßventils eingestellt ist. Bei unterschiedlichen Betriebsdrücken in den einzelnen Kreisen wird jeder Behälter geschützt.

Dem in einem Anschluß angeordneten Rückschlagventil ^{ist} eine Drossel parallelgeschaltet. Damit ist jederzeit ein begrenzter Luftaustausch, z.B. zwischen dem Luftfederkreis mit seinem relativ großen Volumen und dem Raum in dem Druckregler mit seinem relativ kleinen Volumen, möglich, sodaß damit die Last/Leerlaufphasen verlängert werden und ein beschleunigtes Hin- und Herschalten des Druckreglers vorteilhaft vermieden wird.

Die Erfindung wird anhand bevorzugter Ausführungsbeispiele weiter erläutert und beschrieben. Es zeigen:
- Figur 1: eine schematisierte Schnittdarstellung einer ersten Ausführungsform des Druckreglers mit integriertem Mehrkreisschutzventil,
- Figur 2: eine zweite Ausführungsform des Druckreglers mit integriertem Mehrkreisschutzventil,
- Figur 3: eine Weiterbildung des Druckreglers gemäß Figur 2,
- Figur 4: eine besonders einfache Version eines Druckreglers mit einem nachgeschalteten Zweikreisschutzventil,
- Figur 5: eine Weiterbildung des Druckreglers gemäß Figur 2 oder 3 und
- Figur 6: eine Einzelheit an einem Druckregler mit verbesserter Regenerationsphase.

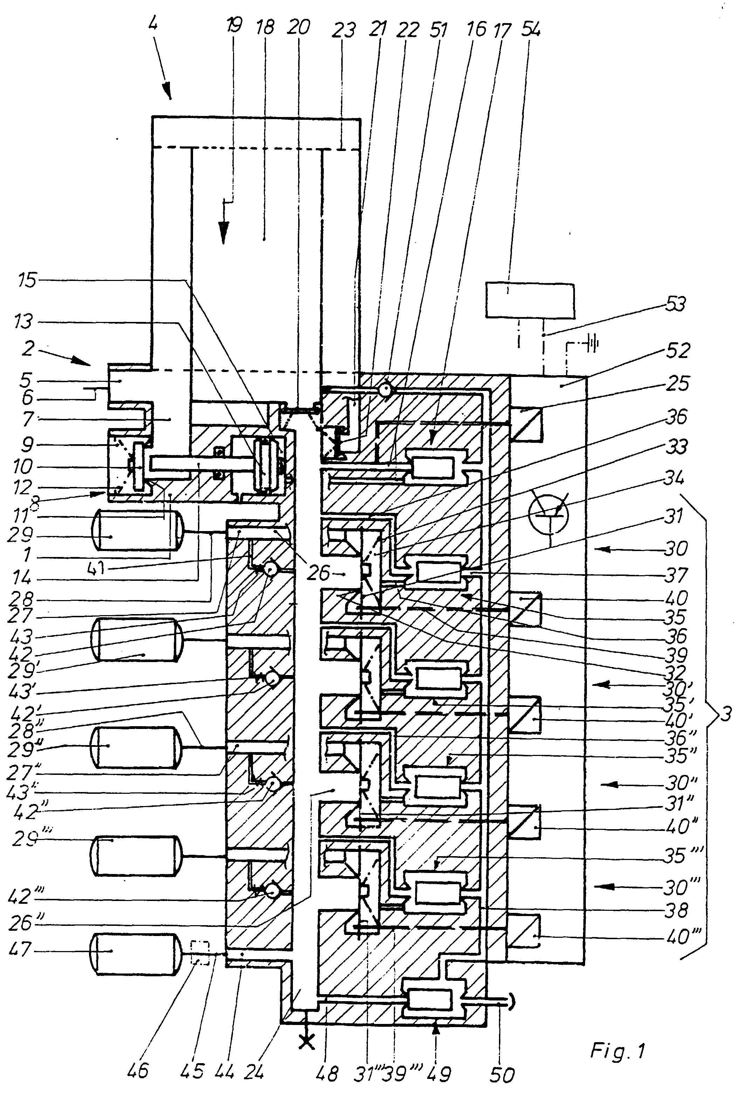

Bei der in Figur 1 dargestellten Ausführungsform sind in einem gemeinsamen Gehäuse 1 die Elemente eines Druckreglers 2, eines Mehrkreisschutzventils 3 und eines Trockners 4 integriert angeordnet. Das Gehäuse 1 bzw. der Druckregler 2 weist einen Eingangsanschluß 5 auf, zu dem eine von einem nicht dargestellten Kompressor ausgehende Leitung 6 herangeführt ist. Der Eingangsanschluß 5 geht in einen Durchtrittsraum 7 über, an den einerseits ein gesteuertes Auslaßventil 8 angeschlossen ist, welches zu einem in die Atmosphäre führenden Auslaß 9 führt. Das gesteuerte Auslaßventil 8 weist einen Ventilkörper 10 auf, der mit einem eingezogenen Rand 11 am Gehäuse 1 zusammenarbeitet und andererseits auf einer Feder 12 abgestützt ist. Dem Ventilkörper 10 ist ein Kolben 13 mit Stößel 14 zugeordnet. Für den Kolben 13 ist eine Druckkammer 15 vorgesehen, zu der eine Leitung 16 führt, in der ein 3/2-Wege-Magnetventil 17 angeordnet ist.

Andererseits verzweigt sich der Durchtrittsraum 7 im Bereich des Trockners 4 in einen Granulatraum 18, der in der Lastlaufphase von Druckluft in Richtung eines Pfeiles 19 durchströmt wird. Am Ende des Durchtrittsraumes 7 bzw. des Granulatraums 18 ist ein Rückschlagventil 20 vorgesehen, welches funktionsmäßig noch zum Druckregler 2 gehört bzw. das Ende des Druckreglers 2 darstellt.

Für den Fall, daß beispielsweise der Granulatraum 18 verstopft sein sollte, ist eine Umgehungsleitung 21 vorgesehen, in der ein Rückschlagventil 22 angeordnet ist, welches die gleiche Funktion hat wie das Rückschlagventil 20, lediglich jedoch für den Notfall und nur unter Ausnutzung eines Grobfilters 23 im Trockner 4.

Das Rückschlagventil 20 ist als normales Rückschlagventil ausgebildet, d. h. sein Ventilkörper ist auf einer vergleichsweise schwach bemessenen Feder abgestützt. Das Rückschlagventil 20 öffnet in einen Einströmraum 24 des Mehrkreisschutzventiles 3. Die Leitung 16 zum Magnetventil 17 der Betätigungseinrichtung 13, 14 des gesteuerten Auslaßventiles 8 des Druckreglers 2 ist an den Einströmraum 24 angeschlossen. Ein ebenfalls dort angeschlossener Drucksensor 25 dient dem Erfassen des Druckes in dem Einströmraum 24.

Das Mehrkreisschutzventil 3 ist kreisweise aufgebaut. Für jeden Kreis ist eine von dem Einströmraum 24 abzweigende Zweigleitung 26 vorgesehen, die zu einem Anschluß 27 führt, von dem eine Leitung 28 ausgeht, die zu einem Vorratsbehälter 29 führt. Jedem Kreis ist eine Steuer- und Anzeigeeinheit 30 zugeordnet, die ein in der Leitung 26 eingeschaltetes Durchlaßventil 31 mit einer Membran als Ventilkörper aufweist, die mit einem Rand 32 am Gehäuse zusammenarbeitet und auf einer Feder 33 abgestützt ist. Die Feder 33 ist in einer Druckkammer 34 angeordnet, zu der über ein Magnetventil 35 eine von dem Einströmraum 24 abzweigende Steuerleitung 36 führt. Das Magnetventil 35 ist als 3/2-Wege-Magnetventil ausgebildet, d. h. es besitzt einen eigenen Auslaß 37, der zu einer Leitung 38 führt, die letzlich an die Atmosphäre angeschlossen ist. Das Magnetventil 35 ist in der nicht-erregten Stellung dargestellt, in welcher der Auslaß 37 geschlossen ist, so daß in der Druckkammer 34 der Druck des Einströmraumes 24 herrscht. Das Durchlaßventil 31 wird somit geschlossen gehalten, da seine Membran auf beiden Seiten von gleichem Druck und zusätzlich noch von der Kraft der Feder 33 in die Schließstellung belastet ist. Für die Messung des Druckes nach dem Durchlaßventil 31, also letztlich im Vorratsbehälter 29 des betreffenden Kreises ist ein über eine Leitung 39 angeschlossener Drucksensor 40 vorgesehen. Parallel zur Leitung 26 ist eine Leitung 41 vorgesehen, die ebenfalls von dem Einströmraum 24 zu dem Anschluß 27 führt. In der Leitung 41 ist in der gezeigten Richtung ein Rückschlagventil 42 eingeschaltet, dessen Ventilkörper auf einer Feder 43 abgestützt ist. Die Feder 43 ist auf einen vergleichsweise hohen Öffnungsdruck eingestellt, beispielsweise auf 7 bar, so daß das Rückschlagventil 42 auch die Funktion eines Sicherheitsventils erfüllt, um im Defektfall einen Notbetrieb des Fahrzeuges aufrechterhalten zu können.

Wie ersichtlich sind die einzelnen Elemente für vier verschiedene Kreise ausgebildet und angeordnet, wobei zur Unterscheidung die Elemente des zweiten Kreises einmal gestrichen sind, beispielsweise die Steuer- und Anzeigeeinheit 30' des Kreises II. Die Elemente des dritten Kreises sind zweimal gestrichen, und die Elemente des vierten Kreises dreimal. Damit sind vier Kreise geschaffen, wobei die ersten beiden Kreise die Betriebsbremskreise darstellen können, der dritte Kreis die Druckluftversorgung einer Hilfs- und/oder Feststellbremse, während der vierte Kreis Nebenverbrauchern zugeordnet ist. Diese vier Kreise sind insoweit parallel angeordnet und übereinstimmend aufgebaut und ausgestattet.

Es ist weiterhin ein Anschluß 44 vorgesehen, von dem eine Leitung 45 über ein Überströmventil 46 zu einem Vorratsbehälter 47 führt, an den die Luftfederung des Kraftfahrzeuges angeschlossen sein möge. Es fehlt hier eine Steuerleitung 36, ein Durchlaßventil 31 und eine Steuer- und Anzeigeeinheit 30. Der Vorratsbehälter 47 wird mit dem Druck aufgefüllt, den der Kompressor liefert. Von dem Einströmraum 24 führt eine Leitung 48 zu einem Magnetventil 49 mit einer Entlüftungsöffnung 50, an die in nicht-erregter Stellung des Magnetventils 49 die Leitung 38 angeschlossen und damit mit der Atmosphäre verbunden ist. Das Magnetventil 49 steuert die Regenerationsphase des Trockners 4. Wenn das Magnetventil 49 erregt wird, wird die Entlüftungsöffnung 50 abgeschlossen, und die Druckluft aus dem Vorratsbehälter 47 strömt über die Leitung 48 und 38 sowie ein in dieser Leitung angeordnetes Rückschlagventil 51 rückwärts durch den Granulatraum 18 und nimmt damit die im Granulat abgeschiedene Feuchtigkeit mit. Es versteht sich, daß die Betätigungseinrichtung 13, 14 in diesem Zeitpunkt betätigt ist, so daß das gesteuerte Auslaßventil 8 geöffnet ist und der Kompressor in Leerlaufphase arbeitet.

Für die Steuerung des Magnetventils 17 des Druckreglers 2 sowie der Magnetventile 35, 35', 35'', 35''' und 49 des Mehrkreisschutzventils 3 ist eine gemeinsame Steuerelektronik 52 vorgesehen, die nur schematisch angedeutet ist. Die Steuerelektronik 52 ist über eine elektrische Leitung 53 mit einer Anzeigeeinrichtung 54 verbunden, die insbesondere in der Fahrerkabine angeordnet ist. Über die Anzeigeeinrichtung 54 können über die Drucksensoren 25, 40, 40', 40'' und 40''' gemessene Druck- bzw. Spannungswerte angezeigt werden. Es ist erkennbar, daß jede Steuer- und Anzeigeeinheit 30, 30', 30'', 30''' und jedes Magnetventil 17, 35, 35', 35'', 35''' und 49 getrennt und unterschiedlich gesteuert werden kann. Damit ist insbesondere in einfacher Weise eine Druckbegrenzung in einzelnen Kreisen verwirklichbar. Dies hängt nur von dem Schaltzeitpunkt des betreffenden Magnetventils ab. Dieser kann über den jeweiligen Drucksensor 40, 40' entsprechend geschaltet werden.

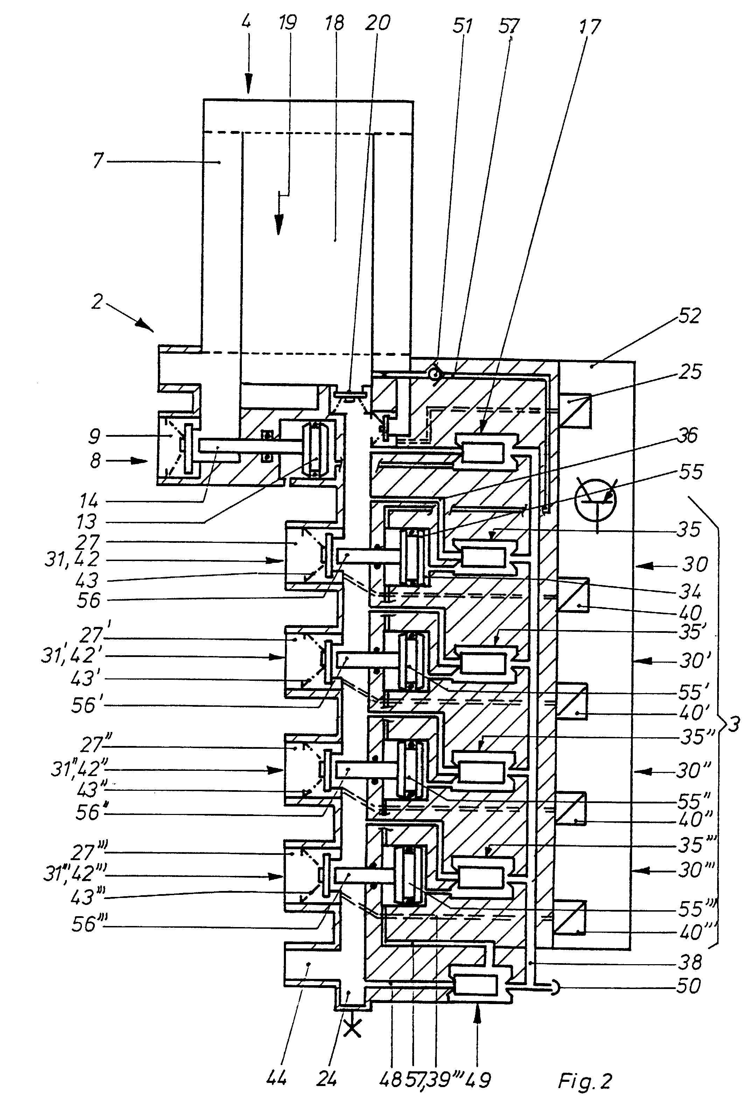

Die in Figur 2 dargestellte Ausführungsform ist zunächst einmal ähnlich aufgebaut wie die Ausführungsform gemäß Figur 1. Lediglich die Steuer- und Anzeigeeinheiten 30, 30', 30'', 30''' sind etwas abgewandelt aufgebaut. Dies liegt daran, daß die Durchlaßventile 31, 31', 31'', usw. mit den Rückschlagventilen 42, 42', 42''' baulich vereinigt sind. Die Betätigungseinrichtung weist Elemente auf, die dem Kolben 13 und dem Stößel 14 des Druckreglers 2 entsprechen, nämlich einen Kolben 55 mit Stößel 56 usw. Die in den Leitungen 36, 36' usw. angeordneten Magnetventile 35, 35' usw. sind in der nicht-erregten Stellung geschlossen, wie dargestellt, so daß die Druckkammern 34, 34' usw. über die Leitung 38 entlüftet sind. Die gesteuerten Auslaßventile 31, 42; 31', 42' usw. sind damit geschlossen. Auf den Ventilkörpern der jeweiligen Rückschlagventile 42, 42' usw. lastet der Druck des jeweiligen Behälters und der Druck der jeweiligen Feder 43. Wenn ein einem der Kreise ein Druckluftverbrauch stattfindet und der Druck sinkt, stellt dies der betreffende Drucksensor 40, 40' usw. fest, so daß in Abhängigkeit davon über die Steuerelektronik 52 das betreffende Magnetventil 35, 35' usw. umgeschaltet werden kann. Der betreffende Kreis wird durch das Aufstoßen des Rückschlagventils 42, 42' usw. aufgefüllt. Es ist hier eine gesonderte Rückströmleitung 57 vorgesehen, die über die entsprechenden Rückräume der Kolben 55, 55' usw. geführt ist, über die Druckluft in der Regenerationsphase entgegen der Richtung des Pfeiles 19 durch den Granulatraum 18 geleitet wird. Damit werden gleichzeitig die Rückräume der Kolben 55, 55' usw. außerhalb der Regenerationsphase entlüftet. Man erkennt, daß die Einzelteile des Druckreglers 2 wie auch die der verschiedenen Kreise des Mehrkreisschutzventils 3 durchaus ähnlich aufgebaut sind. Während der Anschluß 9 zur Atmosphäre führt, führen die Anschlüsse 27, 27' usw. zu den betreffenden Vorratsbehältern 29, 29' usw.. Gemäß der Ausführungsform nach Figur 2 ist jeder einzelne Kreis und auch der Druckregler 2 getrennt steuerbar, und zwar über die gemeinsame Steuerelektronik 52.

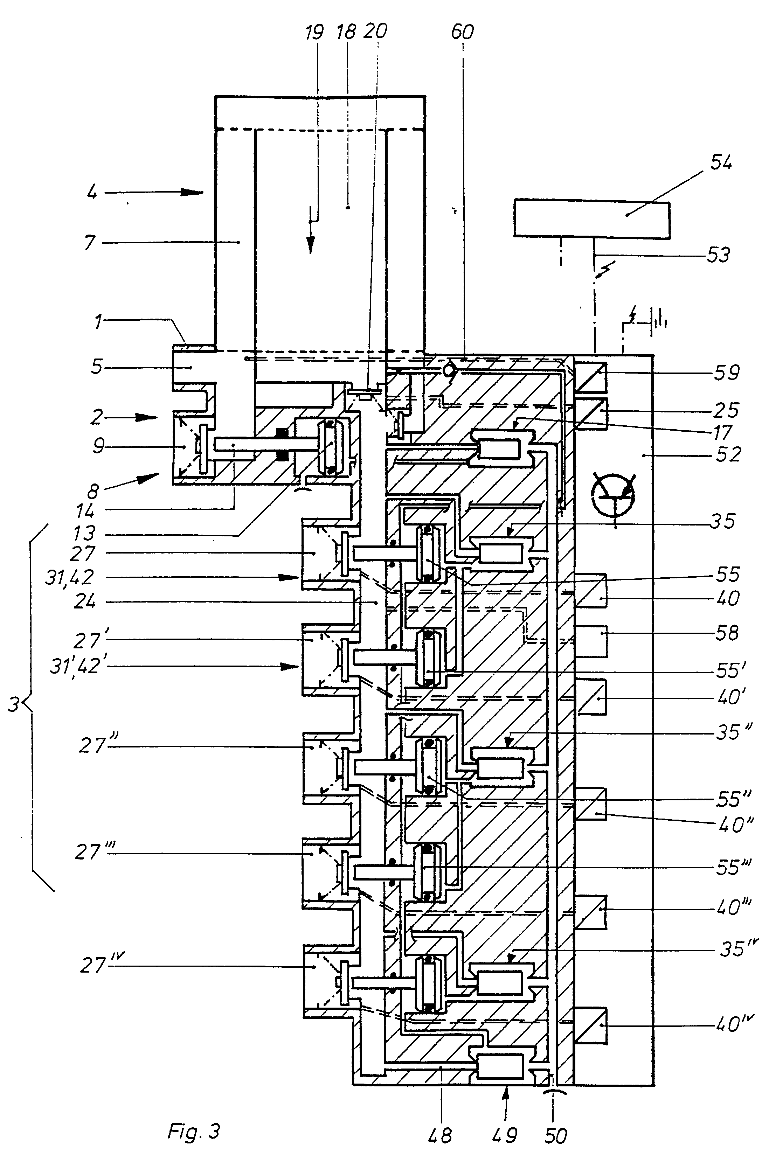

Figur 3 zeigt eine ganz ähnlich aufgebaute Möglichkeit, lediglich mit der Abänderung, daß im Bereich des Mehrkreisschutzventils 3 nur vier Magnetventile 35, 35'', 35'''' und 49 vorgesehen sind. Die beiden ersten Bremskreise mit ihren Anschlüssen 27 und 27' werden gemeinsam über das Magnetventil 35 gesteuert. Die beiden Folgekreise mit ihren Anschlüssen 27" und 27‴ werden gemeinsam über das Magnetventil 35" gesteuert. An den Einströmraum 24 ist ein Feuchtefühler 58 angeschlossen, über den die Regenerationsphase des Trockners 4 gesteuert werden kann, so daß eine Regeneration des Trockners 4 dann stattfindet, wenn dieser keine hinreichende Trockenwirkung mehr erbringt. An den Durchtrittsraum 7 ist ein weiterer Drucksensor 59 über die Leitung 60 angeschlossen, so daß auf diese Art und Weise über die gemeinsame Steuerelektronik 52 auch der Durchflußwiderstand des Trockners 4 festgestellt werden kann. Am Anschluß 27^{IV} kann der Vorratsbehälter 47 der Luftfederung angeschlossen sein, so daß hier gleichsam das Überströmventil 46 in einer ähnlichen Ausbildung wie bei den vorangehenden Kreisen ausgebildet und ebenfalls in das Gehäuse 1 des Druckreglers 2 integriert ist.

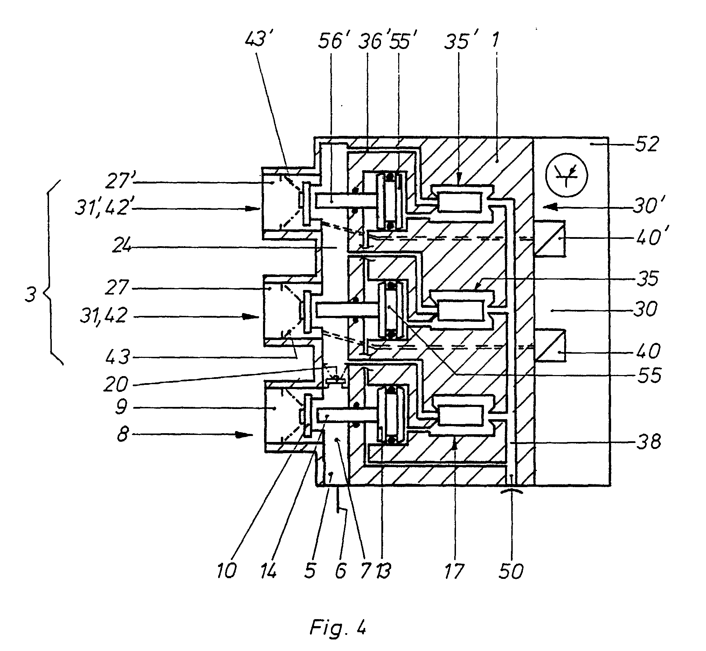

Bei der in Figur 4 dargestellten Ausführungsform des Druckreglers 2 mit dem integrierten Mehrkreisschutzventil 3 fehlt ein Trockner 4. Es sind auch nur zwei Kreise verwirklicht. Ganz bewußt sind die einzelnen Elemente des Druckreglers 2 und des Mehrkreisschutzventiles 3 in analoger Anordnung nebeneinander gezeichnet, wobei lediglich das Rückschlagventil 20 den Durchtrittsraum 7 von dem Einströmraum 24 abtrennt. Es versteht sich, daß gemäß dieser Ausführung natürlich auch mehrere Kreise vorgesehen sein könnten. Die Steuerung erfolgt wiederum über die gemeinsame Steuerelektronik 52. Sie wird je nach den Bedürfnissen durchgeführt und kann insoweit beispielsweise auch eine bevorzugte Befüllung, eine Druckbegrenzung o. dgl. verwirklichen.

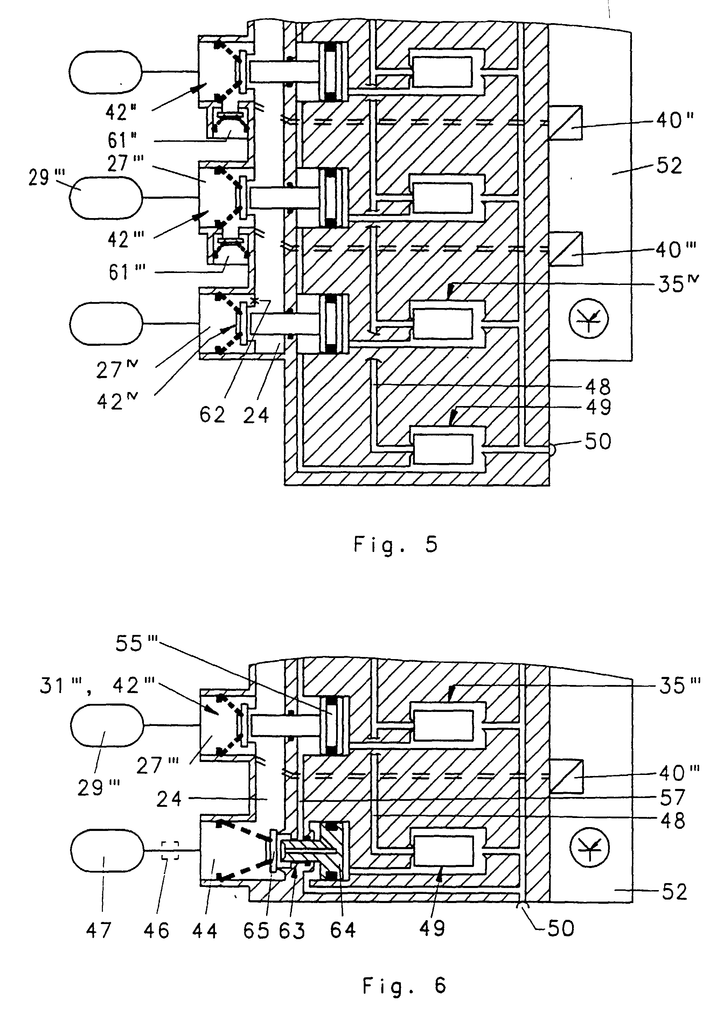

In Figur 5 ist der kombinierte Druckregler/Trockner/Mehrkreisschutzventil nur teilweise dargestellt. Das Ausführungsbeispiel baut auf dem Ausführungsbeispiel der Figur 2 bzw. 3 auf. Jedem Rückschlagventil 42, 42', usw. ist ein in die Atmosphäre öffnendes Sicherheitsventil 61, 61', usw. nachgeschaltet, mit Ausnahme des Rückschlagventils 42^{IV}. Bei diesem fünften Kreis, der in der Regel einen Luftfederkreis darstellt, ist ein gesondertes Sicherheitsventil nicht erforderlich, weil hier das Auslaßventil 8 die betreffende Funktion übernimmt. Die Anordnung der Sicherheitsventile 61, 61', 61'' und 61''' ist nur dann erforderlich, wenn in den Kreisen I bis IV unterschiedliche Betriebsdrücke Anwendung finden. Beispielsweise können die Kreise I und II für Betriebsdrücke von 10 bar und die Kreise III und IV für 8,5 bar ausgelegt und eingestellt sein. Im Luftfederkreis V mögen 12,5 bar herrschen, und das Auslaßventil 8 möge auf 13,5 bar eingestellt sein. Für diesen Fall werden die Sicherheitsventile 61 und 61' auf etwa 11 bar und die Sicherheitsventile 61'' und 61''' auf etwa 9,5 bar eingestellt.

Eine andere Einzelheit besteht darin, daß, wie in Figur 5 dargestellt, im Anschluß 27^{IV} dem dort angeordneten Rückschlagventil 42^{IV} eine Drossel 62 parallel geschaltet ist. Über diese Drossel 62 besteht damit permanent Verbindung zwischen dem Raum 24 mit relativ kleinem Volumen und dem Luftfederkreis mit relativ großem Volumen, so daß ein Druckaustausch stattfinden kann. Dies führt vorteilhaft dazu, daß die Last/Leerlaufphase des Druckreglers verlängert wird, d. h. der Druckregler schaltet in vergleichsweise längeren zeitlichen Abständen zwischen Lastlaufphase und Leerlaufphase hin und her.

Die Ausführungsform gemäß Figur VI baut auf der Ausführungsform gemäß Figur 2 bzw. 3 auf. Es geht hier nur um die Regenerationsphase. Über das Magnetventil 49 wird ein 3/2-Wege-Ventil 63 angesteuert, welches einen Stufenkolben 64 aufweist, der in der dargestellten Weise gleitend und gedichtet im Gehäuse geführt ist. Der Stufenkolben 64 wird über das Magnetventil 49 auf seiner großen Wirkfläche angesteuert. Sein Fortsatz arbeitet mit einem Ventilkörper 65 zusammen, der in der dargestellten Weise im Raum 24 federnd aufgehängt ist und ein Einlaßventil für Druckluft aus dem Raum 24 in die Rückströmleitung 57 darstellt. Durch Bemessung des Spiels zwischen dem Fortsatz und der entsprechenden Durchbrechung im Gehäuse kann ein relativ großer Durchlaßquerschnitt zur Verfügung gestellt werden, der jedenfalls größer ist, als der Durchlaßquerschnitt des Magnetventils 49. In der Regenerationsphase wird das relativ große Volumen des Luftfederkreises in Verbindung mit dem vergrößerten Durchlaßquerschnitt dazu benutzt, um die Regenerationszeit abzukürzen und insoweit beschleunigt durchführen zu können. Auch diese Regenerationsphase wird zweckmäßig von der Steuerelektronik 52 gesteuert, beispielsweise über einen Feuchtefühler 58, wie er in Figur 3 dargestellt ist.

### BEZUGSZEICHENLISTE

- 1 -: Gehäuse
- 2 -: Druckregler
- 3 -: Mehrkreisschutzventil
- 4 -: Trockner
- 5 -: Eingangsanschluß
- 6 -: Leitung
- 7 -: Durchtrittsraum
- 8 -: gesteuertes Auslaßventil
- 9 -: Auslaß
- 10 -: Ventilkörper

- 11 -: Rand
- 12 -: Feder
- 13 -: Kolben
- 14 -: Stößel
- 15 -: Druckkammer
- 16 -: Leitung
- 17 -: Magnetventil
- 18 -: Granulatraum
- 19 -: Pfeil
- 20 -: Rückschlagventil

- 21 -: Umgehungsleitung
- 22 -: Rückschlagventil
- 23 -: Grobfilter
- 24 -: Einströmraum
- 25 -: Drucksensor
- 26 -: Zweigleitung
- 27 -: Anschluß
- 28 -: Leitung
- 29 -: Vorratsbehälter
- 30 -: Steuer- und Anzeigeeinheit

- 31 -: Durchlaßventil
- 32 -: Rand
- 33 -: Feder
- 34 -: Druckkammer
- 35 -: Magnetventil
- 36 -: Steuerleitung
- 37 -: Auslaß
- 38 -: Leitung
- 39 -: Leitung
- 40 -: Drucksensor

- 41 -: Leitung
- 42 -: Rückschlagventil
- 43 -: Feder
- 44 -: Anschluß
- 45 -: Leitung
- 46 -: Überströmventil
- 47 -: Vorratsbehälter
- 48 -: Leitung
- 49 -: Magnetventil
- 50 -: Entlüftungsöffnung

- 51 -: Rückschlagventil
- 52 -: Steuerelektronik
- 53 -: elektrische Leitung
- 54 -: Anzeigeeinrichtung
- 55 -: Kolben
- 56 -: Stößel
- 57 -: Rückströmleitung
- 58 -: Feuchtefühler
- 59 -: Drucksensor
- 60 -: Leitung

- 61 -: Sicherheitsventil
- 62 -: Drossel
- 63 -: 3/2-Wege-Ventil
- 64 -: Stufenkolben
- 65 -: Ventilkörper

## Patentansprüche

1. Druckregler für Druckluftbeschaffungsanlagen von Kraftfahrzeugen, mit einem einen Eingangs- (5), einen Durchgangsanschluß und einen Auslaß (9) aufweisenden Gehäuse (1), in dem ein Durchtrittsraum (7) für die herangeführte Druckluft vorgesehen ist, der über ein gesteuertes Auslaßventil (8) in dessen Offenstellung mit der Atmosphäre verbindbar ist, mit einem dem Durchtrittsraum (7) nachgeschalteten Rückschlagventil (20), mit einer Einrichtung zum abwechselnden Öffnen und Schließen des Auslaßventils (8) und mit einem den Druck nach dem Rückschlagventil (20) erfassenden Drucksensor (25), **dadurch gekennzeichnet**, daß im Gehäuse (1) des Druckreglers (2) zwecks Integration eines Mehrkreisschutzventils (3) mehrere gleichartige Steuer- und Anzeigeeinheiten (30, 30', 30'' usw.) vorgesehen sind, die nach dem Rückschlagventil (20) des Druckreglers (2) abzweigen, und daß jede Steuer- und Anzeigeeinheit (30, 30', usw.) ein entgegen der Strömungsrichtung schließendes Rückschlagventil (42, 42', 42'' usw.), eine Betätigungseinheit (35, 34; 35', 34' usw.) zum gesteuerten Öffnen eines Durchlaßventils (31, 31', 31'' usw.) und einen Drucksensor (40, 40', 40'' usw.) zum Erfassen des Drucks nach dem gesteuerten Rückschlagventil (42, 42', 42" usw.) aufweist.

2. Druckregler nach Anspruch 1, **dadurch gekennzeichnet**, daß die Betätigungseinheit (35, 34; 35', 34' usw.) ein 3/2-Wege-Magnetventil (35, 35', 35'' usw.) aufweist.

3. Druckregler nach Anspruch 1, **dadurch gekennzeichnet**, daß das Rückschlagventil (42, 42', usw.) jeder Steuer- und Anzeigeeinheit (30, 30', usw.) zugleich als Sicherheitsventil ausgebildet ist.

4. Druckregler nach Anspruch 1, **dadurch gekennzeichnet**, daß für die Betätigung des gesteuerten Auslaßventils (8) des Druckreglers (2) und der Steuer- und Anzeigeeinheiten (30, 30' usw.) eine gemeinsame Steuerelektronik (52) vorgesehen ist, die die Magnetventile (17; 35, 35' usw.; 49) der Betätigungseinheiten in Abhängigkeit von den von den Drucksensoren (25; 40, 40', usw.) erfassten Drücken steuert.

5. Druckregler nach einem der Ansprüche 1 bis 4, **dadurch gekennzeichnet**, daß in dem Durchtrittsraum (7) des Druckreglers (2) vor dem nachgeschalteten Rückschlagventil (20) ein regenerierbarer Trockner (4) vorgesehen ist, der über die gemeinsame Steuerelektronik (52) gesteuert ist, und daß ein 3/2-Wege-Magnetventil (49) mit nachgeschaltetem Rückschlagventil (51) für die Regeneration vorgesehen ist.

6. Druckregeler nach einem der Ansprüche 1 bis 5, **dadurch gekennzeichnet**, daß das Rückschlagventil (42, 42', 42'' usw.) und das Durchlaßventil (31, 31', 31'' usw.) jeder Steuer- und Anzeigeeinheit (30, 30', 30'' usw.) baulich vereinigt ist.

7. Druckregler nach Anspruch 6, **dadurch gekennzeichnet**, daß dem Rückschlagventil (42, 42' usw.) jeder Steuer- und Anzeigeeinheit (30, 30' usw.) als Betätigungseinheit ein Kolben (55, 55' usw.) mit Stößel (56, 56' usw.) zugeordnet ist, dessen Druckkammer (34, 34' usw.) über das jeweilige Magnetventil (35, 35' usw.) belüftbar ist.

8. Druckregler nach Anspruch 7, **dadurch gekennzeichnet**, daß die Druckkammern (34, 34' usw.) mehrerer Kolben (55, 55' usw.) mehrerer Steuer- und Anzeigeeinheiten (30, 30' usw.) über ein gemeinsames Magnetventil (35, 35'' usw.) belüftbar sind.

9. Druckregler nach Anspruch 1, **dadurch gekennzeichnet**, daß jedem Rückschlagventil (42, 42', usw.) je ein in die Atmosphäre öffnendes Sicherheitsventil (61, 61', usw.) nachgeschaltet ist, welches auf einen Öffnungsdruck zwischen dem Betriebsdruck des betreffenden Kreises und dem Öffnungsdruck des Auslaßventils (8) eingestellt ist.

10. Druckregler nach Anspruch 1 oder 3, **dadurch gekennzeichnet**, daß dem im Anschluß (27^{IV}) angeordneten Rückschlagventil (42^{IV}) eine Drossel (62) parallelgeschaltet ist.

## Claims

1. Unloader for a source of air under pressure on vehicles, comprising a housing (1) having an inlet (5) and an outlet (9), in which a chamber (7) is provided, and which is connectable to the atmosphere by a controlled outlet valve (8) in its open position, further comprising a check valve (20) positioned in flow direction after the chamber (7), a control unit for alternating opening and closing the controlled outlet valve (8) and a pressure sensor (25) detecting the pressure after the check valve (20), **characterized in** that a plurality of similarly designed control and monitor units (30, 30', 30" etc.) is provided in the housing (1) of the unloader (2) to integrate a multiple-circuit protection valve (3), the units branching off after the check valve (20) of the unloader (2), and in that each unit (30, 30', etc.) comprises a check valve (42, 42', 42'' etc.) closing contrary to the flow direction, actuation means (35, 34; 35', 34'; etc.) to control the opening of an overflow valve (31, 31', 31" etc.) and a pressure sensor (40, 40', 40" etc.) to detect the pressure after the controlled check valve (42, 42', 42" etc.).

2. The unloader of claim 1, **characterized in** that the actuation means (35, 34; 35', 34'; etc.) comprises a 3/2-way-valve (35, 35', 35" etc.).

3. The unloader of claim 1, **characterized in** that the check valve (42, 42' etc.) of each control and monitor unit (30, 30', 30" etc.) is designed as a safety valve.

4. The unloader of claim 1, **characterized in** that a common electronic control unit (52) is provided to actuate the controlled outlet valve (8) of the unloader (2) and the control and monitor units (30, 30', 30" etc.), the electronic control unit (52) controlling the solenoid valves (17; 35, 35' etc.; 49) of the actuation means with respect to the pressures detected by the pressure sensors (25; 40, 40', etc.) each.

5. The unloader of one of the claims 1 to 4, **characterized in** that a regeneratable air-drier (4) is provided in the chamber (7) of the unloader (2) prior to the check valve (20), the air-drier being controlled by the common electronic control unit (52), and in that a 3/2-way-solenoid valve (49) and a check valve (51) are provided for regeneration purposes.

6. The unloader of one of the claims 1 to 5, **characterized in** that the check valve (42, 42', 42" etc.) each and the overflow valve (31, 31', 31" etc.) each of each control and monitor unit (30, 30', 30" etc.) are designed as units.

7. The unloader of claim 6, **characterized in** that a piston (55, 55', 55'' etc.) having a control rod (56, 56', 56" etc.) is allocated to the check valve (42, 42', 42" etc.) each of each control and monitor unit (30, 30', 30" etc.), the pressure chamber (34, 34', 34" etc.) of each piston may be aerated via the solenoid valve (35, 35', 35" etc.) each.

8. The unloader of claim 7, **characterized in** that the pressure chambers (34, 34', 34" etc.) of more than one piston (55, 55', 55" etc.) of the control and monitor units (30, 30', 30" etc.) can be aerated via a common solenoid valve (35, 35" etc.) (Fig. 3).

9. The unloader of claim 1, **characterized in** that a safety valve (61, 61', 61" etc.) opening to the atmosphere is positioned after each check valve (42, 42', 42" etc.), the opening pressure of the safety valve being adjusted between the service pressure of the brake circuit concerned and the opening pressure of the controlled outlet valve (8).

10. The unloader of claim 1 or 3, **characterized in** that a throttle (62) is located parallel to the check valve (42^{IV}) positioned in the connection (27^{IV}).

## Revendications

1. Régulateur de pression pour installations de production d'air comprimé de véhicules automobiles, comportant un boîtier (1) présentant un branchement d'entrée (5), un branchement de passage et une sortie (9), dans lequel est prévue une chambre de passage (7) pour l'air comprimé alimenté, laquelle peut être reliée à l'atmosphère par une soupape de sortie (8) commandée dans sa position d'ouverture, un clapet de non-retour (20) monté en aval de la chambre de passage (7), un dispositif pour l'ouverture et la fermeture alternées de la soupape de sortie (8) et un capteur de pression (25) enregistrant la pression après le clapet de non-retour (20), caractérisé en ce que dans le boîtier (1) du régulateur de pression (2) sont prévues, en vue de l'intégration d'une soupape de protection multicircuit (3), plusieurs unités de commande et d'affichage (30, 30', 30", etc.) de même type, qui se ramifient après le clapet de non-retour (20) du régulateur de pression (2), et en ce que chaque unité de commande et d'affichage (30, 30', etc.) comporte un clapet de non-retour (42, 42', 42", etc.) se fermant dans le sens contraire au sens d'écoulement, une unité d'actionnement (35, 34; 35', 34', etc.) pour l'ouverture commandée d'une soupape de passage (31, 31', 31", etc.), ainsi qu'un capteur de pression (40, 40', 40", etc.) pour l'enregistrement de la pression après le clapet de non-retour (42, 42', 42", etc.) commandé.

2. Régulateur de pression selon la revendication 1, caractérisé en ce que l'unité d'actionnement (35, 34; 35', 34', etc.) comporte une soupape magnétique à 3/2 voies (35, 35', 35", etc.).

3. Régulateur de pression selon la revendication 1, caractérisé en ce que le clapet de non-retour (42, 42', etc.) de chaque unité de commande et d'affichage (30, 30', etc.) est conformé en même temps en tant que soupape de sûreté.

4. Régulateur de pression selon la revendication 1, caractérisé en ce que pour l'actionnement de la soupape de sortie (8) commandée du régulateur de pression (2) et des unités de commande et d'affichage (30, 30', etc.), il est prévu une électronique de commande (52) commune, qui commande les soupapes magnétiques (17; 35, 35', etc.; 49) des unités d'actionnement, en fonction des pressions enregistrées par les capteurs de pression (25; 40, 40', etc.).

5. Régulateur de pression selon l'une des revendications 1 à 4, caractérisé en ce que dans la chambre de passage (7) du régulateur de pression (2) il est prévu, avant le clapet de non-retour (20) monté en aval, un séchoir (4) régénérable, qui est commandé par l'intermédiaire de l'électronique de commande (52) commune, et en ce qu'une soupape magnétique à 3/2 voies (49) avec clapet de non-retour (51) monté en aval est prévue pour la régénération.

6. Régulateur de pression selon l'une des revendications 1 à 5, caractérisé en ce que le clapet de non-retour (42, 42', 42", etc.) et la soupape de passage (31, 31', 31", etc.) de chaque unité de commande et d'affichage (30, 30', 30", etc.) sont réunis de par leur construction.

7. Régulateur de pression selon la revendication 6, caractérisé en ce qu'au clapet de non-retour (42, 42', etc.) de chaque unité de commande et d'affichage (30, 30', etc.) est associé, en tant qu'unité d'actionnement, un piston (55, 55', etc.) avec poussoir (56, 56', etc.), dont la chambre de pression (34, 34', etc.) peut être aérée par la soupape magnétique (35, 35', etc.) respective.

8. Régulateur de pression selon la revendication 7, caractérisé en ce que les chambres de pression (34, 34', etc.) de plusieurs pistons (55, 55', etc.) de plusieurs unités de commande et d'affichage (30, 30', etc.) peuvent être aérées par l'intermédiaire d'une soupape magnétique (35, 35', etc.) commune.

9. Régulateur de pression selon la revendication 1, caractérisé en ce qu'en aval de chaque clapet de non-retour (42, 42', etc.) est montée une soupape de sûreté (61, 61', etc.) s'ouvrant vers l'atmosphère, qui est réglée sur une pression d'ouverture, entre la pression de service du circuit concerné et la pression d'ouverture de la soupape de sortie (8).

10. Régulateur de pression selon la revendication 1 ou 3, caractérisé en ce qu'un organe d'étranglement (62) est monté en parallèle au clapet de non-retour (42^{IV}) situé dans le branchement (27^{IV}).
